# EUROPEAN PATENT APPLICATION

(11) **EP 3 093 808 A1**
(43) Date of publication of application: **16.11.2016**
(21) Application number: 16158487.5
(22) Date of filing: 03.03.2016
(51) Int. Cl.: G06Q 10/06

(54) **CREW PAIRING RELIABILITY ANALYZER**

(30) Priority: 14.05.2015 US 201514712425
(71) Applicant: The Boeing Company, Chicago, IL 60606-1596 (US)
(72) Inventor: WOICEKOWSKI, Michael J., Montreal, QC, H3A 3L4 (CA); HEALY, Garret L., New York City, NY, 10016 (US)
(74) Representative: Cabinet Plasseraud

(57) **Abstract**

For analyzing pairing reliability is disclosed, an apparatus, a method, and a computer program product are disclosed. The apparatus may include a pairing schedule module that receives a crew pairing and a history module that retrieves historical performance data for at least one connectable leg in the crew pairing. The crew pairing includes two or more connectable legs. The apparatus, in some embodiments, includes a limitation module that identifies one or more operation limitations applicable to the crew pairing and a reliability module that calculates a reliability factor for the crew pairing based on the historical performance data. The reliability factor indicates a probability that the crew pairing will comply with the one or more operation limitations.

## Description

### BACKGROUND

This disclosure relates generally to crew pairing, and more particularly to determining the reliability of particular crew pairings.

Crew planning departments are tasked with building crew pairings that are efficient. There are many statistics for measuring efficiency, however there are no established measurements that measure the reliability of a duty period and/or a crew pairing.

### SUMMARY

The subject matter of the present application has been developed in response to the present state of the art, and in particular, in response to shortcomings of assessing the reliability of a crew pairing. The subject matter of the present application has been developed to provide a system and method that overcome at least some of the above-discussed shortcomings of prior art techniques.

An apparatus for analyzing pairing reliability is disclosed. A method and computer program product may also perform the functions of the apparatus. The apparatus may include a pairing schedule module that receives a crew pairing and a history module that retrieves historical performance data for at least one connectable leg in the crew pairing (and in some implementations for each connectable leg in the crew pairing). The crew pairing includes two or more connectable legs. The apparatus, in some embodiments, includes a limitation module that identifies one or more operation limitations applicable to the crew pairing and a reliability module that calculates a reliability factor for the crew pairing based on the historical performance data. The reliability factor indicates a probability that the crew pairing will comply with the one or more operation limitations. In some embodiments, at least a portion of the pairing schedule module, history module, limitation module, and reliability module include logic hardware and/or executable code. The executable code is stored on computer readable storage media.

In certain embodiments, the apparatus also includes a threshold module that identifies a time and location where the reliability factor is below a threshold. The apparatus may further include a distribution module that calculates two or more statistical distributions based on the historical performance data where. Each statistical distribution corresponds to one of the connectable leg of the crew pairing and the reliability module calculates the reliability factor using the statistical distributions. Additionally, the apparatus may include a robustness module that calculates a robustness value for the crew pairing. The robustness value indicates a difference in probabilities between a scheduled value of the statistical distribution and a limiting value of the crew pairing.

In some embodiments, the reliability module may include a leg probability module that calculates, for each leg of the crew pairing, a probability of exceeding an apportioned amount of a particular operation limitation during the leg. The reliability module may also include an aggregate module that determines an aggregate likelihood for the particular operation limitation based on the probability of each leg exceeding the particular operation limitation. The aggregate likelihood indicates a probability of the crew pairing exceeding the particular operation limitation.

In some embodiments, the pairing history module may include a selection module that receives selection criteria for the historical performance data and a filter module that returns historical performance data meeting the selection criteria. The selection criteria may be a time, a month, a season, an operating condition, a flight number, an equipment identifier, a departure location, and an arrival location. In certain embodiments, the pairing history module further includes a sample size module that compares a sample size of the historical performance data meeting the selection criteria to a sample size threshold. The filter module returns additional historical performance data in response to the sample size being below the sample size threshold.

In certain embodiments, the historical performance data may include one or more of: an actual departure time, an actual arrival time, an actual block time, an amount of departure delay, and an amount of arrival delay. The operation limitations may include one or more of: a minimum rest period, a minimum connection time, a maximum flight time, and a maximum flight duty period time.

In some embodiments, the apparatus includes a buffer module that determines a scheduled value for the crew pairing that satisfies a predetermined reliability factor. Additionally, the pairing schedule module may receive a daily schedule comprising two or more crew pairings in a given day and the apparatus may include an aggregator module that combines reliability factors of the crew pairings in the daily schedule.

The method, according to some embodiments, includes receiving a crew pairing and identifying two or more operation limitations associated with the crew pairing. The crew pairing includes two or more flight legs organized into one or more duty periods, two or more scheduled departures times, and two or more scheduled arrival times. Each flight leg is associated with a scheduled departure time and a scheduled arrival time. The method may include retrieving historical performance data based on the flight legs, scheduled departures times, and scheduled arrival times and calculating, for each of the operation limitations in some implementations, a probability of a duty period in the crew pairing exceeding the operation limitation. Calculating the probability of a duty period exceeding the operation limitation is based on the historical performance data.

In some embodiments, the method may include receiving an operating condition, wherein retrieving historical performance data comprises retrieving actual departure times, actual arrival times, actual block times, amount of departure delay, and amount of arrival delay for flights along each of the flight legs having operated in the operating condition. Calculating the probability of a duty period in the crew pairing exceeding the operation limitation may include calculating a probability that a duty time will exceed an allotted duty time, calculating a probability that a block time will exceed an allotted block time, and calculating a probability that a connection time will meet a minimum connection time. These probabilities are calculated for each leg of the crew pairing.

In some embodiments, the method may include receiving a reliability threshold and identifying a time and location in the crew pairing where the probability of the crew pairing exceeding the operation limitation is greater than the reliability threshold. In certain embodiments, calculating the probability of a duty period in the crew pairing exceeding the operation limitation includes calculating a block time reliability factor, a duty time reliability factor, a rest time reliability factor, and a connection time reliability factor.

A computer program product, according to some embodiments, includes a computer readable storage medium that stores code executable by a processor. The executable code include code to perform: receiving an itinerary and identifying a two or more operation limitations associated with the itinerary. The itinerary includes a two or more legs, a two or more scheduled departures times, and a two or more scheduled arrival times. Each leg is associated with a scheduled departure time and a scheduled arrival time. The executable code also includes code to perform: retrieving historical performance data based on the legs, departures times, and arrival times, as well as calculating a probability of the itinerary surpassing the operation limitation based on the historical performance data. The probability of the itinerary surpassing the operation limitation is calculated for each of the operation limitations.

In certain embodiments, the operation limitations include equipment limitations and operator limitations. The operator limitations may include a minimum rest period, a minimum connection time, a maximum flight time, and a maximum flight duty period time. In certain embodiments, receiving the itinerary includes receiving a schedule having two or more itineraries and the executable code further performing calculating a probability that a rest time between consecutive itineraries will meet a rest time limitation.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific embodiments that are illustrated in the appended drawings. Understanding that these drawings depict only typical embodiments of the subject matter, they are not therefore to be considered to be limiting of its scope. The subject matter will be described and explained with additional specificity and detail through the use of the drawings, in which:
Figure 1 is a block diagram showing one embodiment of a system for analyzing pairing reliability;
Figure 2 is a schematic block diagram showing one embodiment of an apparatus for analyzing pairing reliability;
Figure 3 is a schematic block diagram showing another embodiment of an apparatus for analyzing pairing reliability;
Figure 4 is a flowchart diagram of one embodiment of a method for analyzing pairing reliability;
Figure 5 is a flowchart diagram of another embodiment of a method for analyzing pairing reliability; and
Figure 6 is a schematic block diagram of showing a crew pairing and a reliability analysis for the crew pairing.

### DETAILED DESCRIPTION

Reference throughout this specification to "one embodiment," "an embodiment," or similar language means that a particular feature, structure, or characteristic described in connection with the embodiment is included in at least one embodiment of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the present disclosure, however, absent an express correlation to indicate otherwise, an implementation may be associated with one or more embodiments.

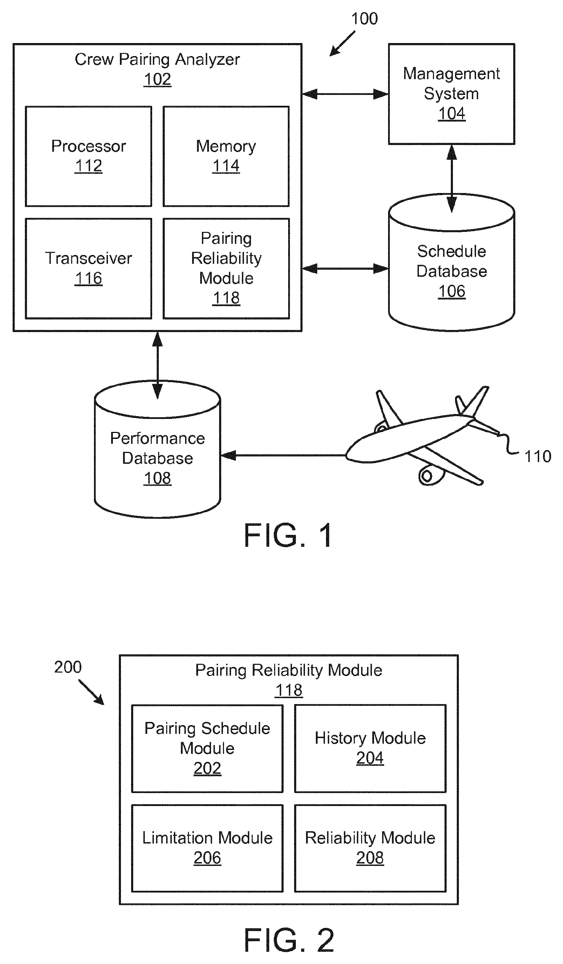

Figure 1 is a block diagram showing one embodiment of system 100 for analyzing the reliability of a crew pairing. The system 100 comprises a crew pairing analyzer 102, a management system 104, a schedule database 106, a performance database 108, and at least one vehicle 110 that provides performance data to the performance database 108.

The crew pairing analyzer 102 is configured to analyze the reliability of one or more crew pairings, such as a proposed crew pairing. In some embodiments, the crew pairing analyzer 102 may include a processor 112, a memory 114, a transceiver 116, and a pairing reliability module 118. The components of the crew pairing analyzer 102 may be communicatively coupled to one another, for example via a computer bus. In some embodiments, the crew pairing analyzer 102 is a computing device, such as a server or a mainframe computer, which receives instructions and/or data from the management system 104 and accesses data stored in the schedule database 106 and/or the performance database 108 in order to analyze the reliability of one or more crew pairings.

The processor 112, in one embodiment, may include any known controller capable of executing computer-readable instructions and/or capable of performing logical operations. For example, the processor 112 may be a microcontroller, a microprocessor, a central processing unit (CPU), a graphics processing unit (GPU), an auxiliary processing unit, a FPGA, or similar programmable controller. In some embodiments, the processor 112 executes instructions stored in the memory 114 to perform the methods and routines described herein. The processor 112 is communicatively coupled to the memory 114, the transceiver 116, and the pairing reliability module 118.

The transceiver 116, in one embodiment, is configured to send and to receive electronic communications via one or more data links. According to some embodiments, the transceiver 116 is a wireless transceiver capable of exchanging information via wireless data links. Examples of wireless data links include, but are not limited to, a satellite communication link (e.g., using a satellite radio band), a wireless cellular network, a local wireless network, such as a Wi-Fi network, an ad hoc network, and the like. In some embodiments, the transceiver 116 communicates via an infrared signals and/or ultrasonic signals. All standards and/or connection types include the latest version and revision of the standard and/or connection type as of the filing date of this application.

The memory 114, in one embodiment, is a computer readable storage medium. In some embodiments, the memory 114 includes volatile computer storage media. For example, the memory 114 may include a random access memory (RAM), including dynamic RAM (DRAM), synchronous dynamic RAM (SDRAM), and/or static RAM (SRAM). In some embodiments, the memory 114 includes non-volatile computer storage media. For example, the memory 114 may include a hard disk drive, a flash memory, or any other suitable non-volatile computer storage device. In some embodiments, the memory 114 includes both volatile and non-volatile computer storage media.

The memory 114 stores data relating to analyzing pairing reliability. For example, the memory 114 may store crew pairings, historical performance data, statistical distributions, operation limitations, and the like. In some embodiments, the memory 114 also stores program code for analyzing pairing reliability, as described herein.

The pairing reliability module 118, in one embodiment, is configured to receive a crew pairing including a plurality of connectable legs, retrieve historical performance data for each connectable leg in the crew pairing, identify one or more operation limitations applicable to the crew pairing, and calculate a reliability factor for the crew pairing based on the historical performance data. The reliability factor indicates a probability that the crew pairing will comply with the one or more operation limitations. In some embodiments, the pairing reliability module 118 calculates a robustness value for the crew pairing, wherein the robustness value indicates a difference in reliability between two reliability factors. For example, a calculated robustness value may specify an increase in compliance probabilities between a mean value of the historical data and an allotted value of the crew pairing. As another example, a calculated robustness value may specify a decrease in compliance probability between a first scheduled flight time and a second scheduled flight time.

The pairing analyzer 102 (specifically, the pairing reliability module 118) allows the management system 104 to analyze the reliability of a crew pairing. In some embodiments, the pairing reliability module 118 may also aid in generating a report of incidences when an operation limitation is exceeded and circumstances that led to said incidences. With knowledge of the pairing reliability, the management system 104 may adjust buffers and/or scheduled amounts of time to balance pairing efficiency with pairing reliability. In some embodiments, the management system 104 provides one or more proposed crew pairings to the pairing analyzer 102. In one embodiment, the management system 104 sends one or more pairing identifiers, wherein the pairing analyzer 102 accesses the schedule database 106 to obtain information (e.g., scheduled departure/arrival times and location) for the identified pairings.

The pairing analyzer 102 may report the pairing reliabilities to the management system 104. In certain embodiments, the pairing analyzer 102 may also send reports, proposals, and/or recommendations to the management system 104. For example, the pairing analyzer 102 may send an event report to the management system 104 detailing times and/or locations where a crew is likely to exceed an operation limitation.

The schedule database 106 is configured to store scheduling data for one or more pairings. In certain embodiments, the schedule database 106 may also store a daily fleet schedule and/or a crew duty roster, the daily fleet schedule and the crew duty roster each being associated with a plurality of pairings. The pairings may be scheduled by the management system 104, and the pairing analyzer 102 may access the pairings via the management system to determine their reliability.

The performance database 108 is configured to store historical performance data, such as flight history information. In some embodiments, the performance database 108 stores both planned (e.g., scheduled) and actual values for one or more of: flight numbers, date of operation, equipment, aircraft number, departure times, arrival times, block times, duty times, connection times, rest period times, flight duty period (FDP) times, amount of departure/arrival delay, and the like. In certain embodiments, the performance database 108 stores operating conditions (e.g., weather or wind conditions) experiences during each flight. The performance database 108 may organize the historical performance data, for example, according to location, season, time of day, or other suitable category. The pairing analyzer 102 accesses the performance database 108 in order to calculate the reliability of a crew pairing based on past performance along the same routes or legs.

Figure 2 is a schematic block diagram showing one embodiment of an apparatus 200 for analyzing pairing reliability. The apparatus 200 includes a pairing reliability module 118, which may be substantially similar to the pairing reliability module 118 described above with reference to Figure 1. In general, the pairing reliability module 118 determines the reliability of a crew pairing, for example, by analyzing historical data to calculate a probability of the pairing exceeding one or more operation limitations. The pairing reliability module 118, in one embodiment, includes a pairing schedule module 202, a history module 204, a limitation module 206, and a reliability module 208. The modules of the pairing reliability module 118 may be communicatively coupled to one another.

The pairing schedule module 202, in one embodiment, is configured to receive a crew pairing. In some embodiments, the pairing schedule module 202 retrieves a crew pairing from a database, such as the schedule database 106. In other embodiments, the apparatus 200 receives a query from the management system 104. The query may include a proposed crew pairing, where the pairing schedule module 202 extracts the proposed crew pairing from the received query. In one embodiment, the pairing schedule module 202 parses the crew pairing to identify a plurality of legs (e.g., segments of the pairing) and arrival/departure times associated with each leg.

As used herein, a crew pairing refers to an itinerary, for example, for one or more crew members. The crew pairing includes a sequence of connectable legs, where the sequence starts from and ends at the same location. In some embodiments, the starting/ending location is a crew base for one or more crew members traveling in the pairing. The crew pairing is the complete trip for a crew member starting at the crew member's base and ending at the same base. While the crew pairing is often described as relating to aviation, in other embodiments the propose pairing may be an itinerary describing a route and related timing for ground vehicles, watercraft, or other forms of transportation. For example, the crew pairing may be a delivery route for a common carrier or a schedule for drivers of a train or bus.

The crew pairing includes at least one duty period, where the duty period includes at least one connectable leg. Further, the crew pairing may extend over more than one day. An example of a single-day, single-duty pairing is a trip starting at Chicago, travelling to Denver, and then returning to Chicago in the same day (e.g., the same duty period). An example of a two-day, two-duty pairing is a trip starting at Chicago, travelling to Denver, returning to Chicago, then travelling again to Denver during the same day (e.g., in the same duty period), follow by 15 hours of rest and returning again to Chicago during the second day (e.g., in the second duty period). As described, a duty period may start and end at different locations, even though the pairing containing the duty period usually starts from and ends at the same location.

In some embodiments, the pairing schedule module 202 identifies timing attributes of the crew pairing. The timing attributes of the crew pairing relate to scheduled arrival/departure times, scheduled block times, a scheduled season, and the like. For example, the pairing schedule module 202 may parse arrival/departure times from the crew pairing and derive block times from the parsed arrival/departure times. As another example, the pairing schedule module 202 may identify a date associated with the crew pairing and identify a season corresponding the date. In further embodiments, the pairing schedule module 202 may identify geographic locations associated with the crew pairing. For example, the pairing schedule module 202 may identify destinations, routes, airports, fueling locations, warehouse locations, or other geographic locations of the crew pairing.

In some embodiments, the pairing schedule module 202 receives a plurality of crew pairings corresponding to a vehicle schedule over a period of time, such as over a day, a week, or a month. For example, the pairing schedule module 202 may receive a plurality of pairings comprising a daily schedule for fleet of vehicles. In some embodiments, the pairing schedule module 202 receives a plurality of crew pairings for a particular crewmember over a period of time, such as a week, a month, or a quarter. These crew pairings may identify a duty roster for the particular crewmember over the period of time. The pairing schedule module 202 may identify timing attributes of the plurality of crew pairings, as described above.

The history module 204, in one embodiment, is configured to retrieve historical performance data of the crew pairing for each connectable leg in the crew pairing. For example, a crew pairing may include a leg traveling from Chicago to Dallas. The history module 204 will then retrieve performance data of previous flights between Chicago and Dallas. In some embodiments, history module 204 retrieves performance data only for flights between the two locations made in the same direction, at the same time of day, in the same day of the week, and/or in the same season.

As used herein, historical performance data refers to data collected from previous flights. In some embodiments, the historical performance data includes actual departure times, actual arrival times, actual block times, scheduled arrival/departure times, scheduled block times, and/or amounts of delay (e.g., departure delay or arrival delay). In certain embodiments, the historical performance data includes departure location, arrival location, date (including day of week), season, and/or operating conditions. The operating conditions may include weather conditions, wind conditions, lighting conditions, temperatures, and the like. Thus, the historical performance data may be selected to match the times and/or conditions (e.g., estimated conditions) of the crew pairing.

In certain embodiments, the history module 204 may receive selection criteria. The history module 204 filters the historical performance data to select only historical performance data matching the selection criteria. The selection criteria may include one or more of: date (e.g., day of week) ranges, time ranges, month, season, flight number, equipment identifier, arrival location, departure location, and operating condition. Accordingly, in some embodiments, the performance data includes identifying data used to select and/or filter the performance data.

The limitation module 206, in one embodiment, is configured to identify one or more operation limitations applicable to the crew pairing. In some embodiments, the limitation module 206 is further configured to associate a subset of the historical performance data with each operation limitation. As used herein, an operation limitation refers to a restriction on the operation of equipment (e.g., a vehicle). In some embodiments, the operation limitation may be an operator limitation, such as a maximum number of duty hours (e.g., working hours) or a minimum amount of rest time between duty periods. While the described embodiments mainly discuss operator limitations, in other embodiments, the operation limitation may be an equipment limitation, such as a fuel range or maximum run time of a mechanical component.

In one embodiment, the operation limitations include a block time limitation, a duty time limitation, a rest time limitation, and a connection time limitation. In another embodiment, the operation limitations may include a flight duty period limitation and/or a flight time limitation. In yet another embodiment, the operation limitations may include an equipment running hour limitation and/or a fuel consumption limitation. Some operation limitations may relate to the duty level (for example block time or duty time period limitations), while others may relate to the pairing level (for example, a rest period limitation applies to rest time between consecutive duty periods). In some embodiments, the limitation module 206 identifies a plurality of operation limitations that are to be simultaneously satisfied by a crew pairing (or, alternatively, a daily (fleet) schedule or crew duty roster).

As used herein, block time refers to a time period beginning with an aircraft moving from a parking location for the purpose of taking off and lasting until the plane lands and comes to rest in a new parking location. As used herein, duty time refers to time spent "on duty" (e.g., attending to work-related tasks). Relatedly, a duty period refers to a time period during which a crew member is "on duty" and may include flight time, sit time (e.g., idle time between flight legs), break time, and time spent attending to pre-flight or post-flight tasks. As used herein, rest time refers to time spent between subsequent duty periods.

Flight time, as used herein, refers to time spend in the air as a crew member. In certain embodiments, flight time commences when the engines start and ends when the aircraft comes to rest after landing. In other embodiments, flight time commences when an aircraft moves under its own power for the purpose of flight and ends when the aircraft comes to rest after landing. In some embodiments, flight time does not include time spent performing pre-flight tasks. Further, flight duty period, as used herein, refers to time during which a person operates in an aircraft as a crew member. In some embodiments, flight duty period does not include time spent by a non-operating crew member transferring to another location during the duty period (e.g., positioning or deadheading). As used herein, connection time refers to time spent changing aircraft (or other vehicles) during a duty period. In some embodiments, the operation limitations are dictated by law, corporate policy, contract, and/or employment agreement.

In some embodiments, the limitation module 206 determines a limiting value associated with an operation limitation. As used herein, the limiting value refers to a value (e.g., time) at which an operating limitation is reached. The limiting value may be applicable to a single leg, indicating a value for the leg that causes the entire pairing to meet the operation limitation. The limiting value may be a maximum time, in response to the operation limitation being a maximum allowed value (e.g., a maximum flight time or maximum flight duty period time). Alternatively, the limiting value may be a minimum time, in response to the operation limitation being a minimum allowed value (e.g., a minimum rest period or minimum connection time).

For example, for a 3-leg pairing where each leg is scheduled for 2:30 hours of flight time (7:30 hours total scheduled flight time) and where the maximum flight time is 8:00 hours, the limiting value for each leg may be 3:00 hours, meaning the maximum flight time is reached if one leg goes 3:00 hours and the others go the scheduled amount. Alternatively, the limiting value for each leg may be 2:40 hours, which means the maximum flight time is reached if each leg goes 2:40 hours.

Generally, the crew pairing is scheduled to comply with the plurality of operation limitations, however, the apparatus 200 is configured to assess the probability that the crew pairing will exceed one or more of the operation limitations (e.g., determine the reliability of the crew pairing). Thus, the limitation module 206 may identify a plurality of applicable operation limitations and communicate these applicable operation limitations to the reliability module 208, wherein the reliability module 208 assesses the reliability of the crew pairing, daily fleet schedule, or crew duty roster for each of the plurality of operation limitations.

The reliability module 208, in one embodiment, is configured to calculate a reliability factor for the crew pairing based on the historical performance data. As used herein, the reliability factor refers to the statistical probability of the crew pairing complying with the one or more operation limitations. In one embodiment, the crew pairing may be given a reliability factor for each operation limitation. For example, where operation limitations of block time, duty time, rest time, and connection time are evaluated for a crew pairing, the reliability module 208 may calculate a block time reliability factor, a duty time reliability factor, a rest time reliability factor, and a connection time reliability factor.

In some embodiments, the reliability factor may be expressed as a percentage. For example, a block time reliability factor of 91.8 may indicate a probability of 91.8% that the crew pairing (or segment thereof) will comply with a block time limitation. The reliability factor is related to the likelihood that the crew pairing will exceed one or more operation limitations. For example, the reliability factor and the likelihood of exceeding an operation limitation may be complementary values such that the sum of the reliability factor and the likelihood of exceeding an operation limitation equals one (1). Thus, if the block time reliability factor is 91.8%, then the likelihood of exceeding an operation limitation of the crew pairing exceeding the block time limitation is 8.2%.

In some embodiments, the reliability module 208 identifies a reliability factor for each leg (segment) of the crew pairing. Further, the reliability factor for each leg may contain multiple components, each component relating to an operation limitation. As an example, for a four (4) leg pairing evaluated for rest period, connection time, flight duty period, and block time operation limitations, the reliability module 208 may calculate twenty (20) different reliability factors, including a reliability factor for the rest period, a reliability factor for the overall flight duty period, a reliability factor for each of the three (3) connections between subsequent legs, and fifteen (15) reliability factors for the block times of the different leg combinations.

In certain embodiment, the reliability module 208 may aggregate reliability factors of the plurality of legs for a single operation limitation. Thus, an aggregate reliability factor for the crew pairing with respect to a particular operation limitation may be determined based on the individual reliability factors of each leg with respect to the particular operation limitation. In one embodiment, the reliability module 208 may select the lowest reliability factor among the plurality of legs as representative of the aggregate reliability factor. For example, a three-legged pairing with block time reliability factors of 88.1%, 90.2%, and 92.6% for the three legs may have an aggregate block time reliability factors of 88.1%. Alternatively, the reliability module 208 may select the arithmetic mean of the leg block reliability factors as the aggregate reliability factor for the crew pairing. In the above example, 90.3% is the arithmetic mean of the leg block reliability factors (e.g., 88.1%, 90.2%, and 92.6%), and thus the aggregate reliability factor for the pairing.

In one embodiment, the reliability module 208 determines a daily reliability factor for all fleet operations scheduled for the same day. A plurality of crew pairings associated with the fleet operations scheduled for the same day may be assessed to identify reliability factors for each operation limitation. In another embodiment, the reliability module 208 may determine reliability factors for a duty roster spanning a plurality of sequential pairings. For example, a crew duty roster may schedule one or more crew members for a plurality of pairings over a period of time, for example a month, wherein the reliability module 208 determines the likelihood that the duty roster will comply with the operation limitations over the period of time.

In some embodiments, the reliability module 208 calculates the reliability factor from a statistical distribution of the historical performance data. The statistical distribution may be a density function, a quantile function, or other distribution function. In one embodiment, the statistical distribution function is a cumulative distribution function that describes the probability that an actual time (e.g., flight duration) will be less than an input value (e.g., an allotted duration). Thus, the reliability factor of a particular value (e.g., scheduled block time) may be determined by calculating the cumulative distribution function (CDF) of a density function describing the historical performance data for the particular value (e.g., input into the CDF).

In some embodiments, the reliability module 208 determines a statistical distribution that matches the historical performance data. For example, the reliability module 208 may perform distribution fitting on the historical performance data in order to identify probabilities that the crew pairing will satisfy the operation limitations. In one embodiment, the reliability module 208 determines a statistical distribution for each leg of the crew pairing based on the historical performance data. In another embodiment, the reliability module 208 determines an overall statistical distribution for the entire crew pairing, either by combining the distributions of the individual legs or by referencing historical data from pairings matching the crew pairing. In other embodiments, the reliability module 208 receives statistical distribution models based on the historical performance data from another module, as discussed in further detail below.

In certain embodiments, the reliability module 208 may determine whether the reliability factor for the crew pairing is below a particular reliability threshold. For example, the reliability module 208 may flag any leg whose individual reliability factor is below the particular reliability threshold. The reliability threshold may be user defined so as to match a user's reliability preference. In some embodiments, different operation limitations are associated with different reliability thresholds. For example, an operation limitation having higher violation penalties may be associated with a higher reliability threshold than an operation limitation having lower violation penalties. Further, the reliability module 208 may identify a time and/or location in the crew pairing where the reliability drops below the reliability threshold, as discussed in further detail below.

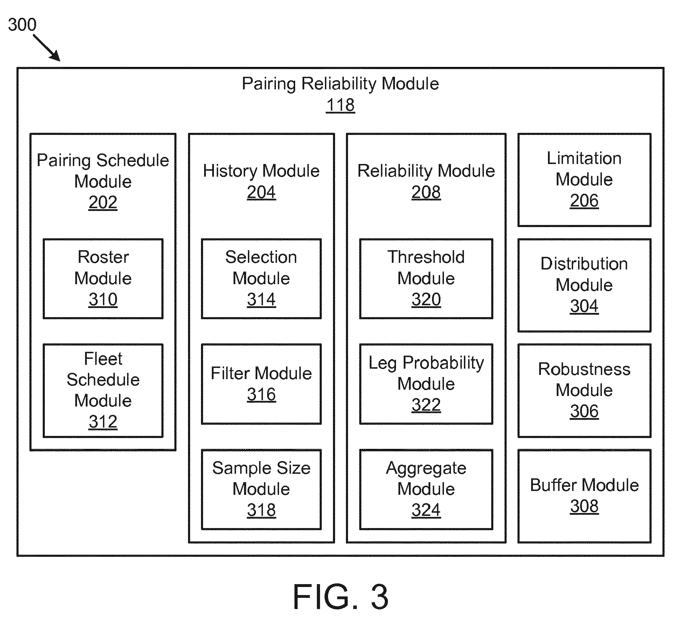

Generally, the reliability module 208 operates on data gathered by the pairing schedule module 202, history module 204, and limitation module 206 to identify the reliability of a crew pairing. For example, the reliability module 208 may fit data gathered by the history module 204 to a statistical distribution and identify the probability that a pairing (or a portion thereof) identified by the pairing schedule module 202 will meet (or exceed) an operation limitation identified by the limitation module 206. In some embodiments, the apparatus 200 returns the reliability value calculated by the reliability module 208 to an enquirer, such as the management system 104. In other embodiments, the apparatus 200 may make recommendation to the management system 104 based on the reliability factor, as discussed below with reference to Figure 3.

Figure 3 is a schematic block diagram showing one embodiment of an apparatus 300 for analyzing pairing reliability. The apparatus 300 may be substantially similar to the apparatus 200 described above with reference to Figure 2. The apparatus 300 includes a pairing reliability module 118 which may be substantially similar to the pairing reliability module 118 described above with reference to Figures 1 and 2. The pairing reliability module 118, in one embodiment, includes a pairing schedule module 202, a history module 204, and a limitation module 206. Additionally, the pairing reliability module 118 may include one or more of a distribution module 304, a robustness module 306, a buffer module 308, a roster module 310, a fleet schedule module 312, a selection module 314, a filter module 316, a sample size module 318, a leg probability module 322, and an aggregate module 324. The modules of the pairing reliability module 118 may be communicatively coupled to one another.

The pairing schedule module 202, in one embodiment, may be substantially as described above with reference to Figure 2. Additionally, the pairing schedule module 202 may comprise one or more sub-modules including the roster module 310 and/or the fleet schedule module 312. Although the pairing schedule module 202 is depicted as a single unit including all the modules 310-312, in some embodiments, the pairing schedule module 202 may include several units in communication with each other, with each unit including one or more of the modules. Further, the units of a multi-unit controller need not be physically proximate to each other, and in fact can be remote from each other, but remain in communication with each other as necessary to perform the functionality of the modules.

The history module 204, in one embodiment, may be substantially as described above with reference to Figure 2. Additionally, the history module 204 may comprise one or more sub-modules including the selection module 314, the filter module 316, and/or the sample size module 318. Although the history module 204 is depicted as a single unit including all the modules 314-318, in some embodiments, the history module 204 can also include several units in communication with each other, with each unit including one or more of the modules. Further, the units of a multi-unit controller need not be physically proximate to each other, and in fact can be remote from each other, but remain in communication with each other as necessary to perform the functionality of the modules.

The limitation module 206 and the reliability module 208, in one embodiment, may be substantially as described above with reference to Figure 2. Additionally, the reliability module 208 may comprise one or more sub-modules including the threshold module 320, the leg probability module 322, and/or the aggregate module 324. Although the history module 204 is depicted as a single unit including all the modules 320-324, in some embodiments, the reliability module 208 can also include several units in communication with each other, with each unit including one or more of the modules. Further, the units of a multi-unit controller need not be physically proximate to each other, and in fact can be remote from each other, but remain in communication with each other as necessary to perform the functionality of the modules.

The distribution module 304, in one embodiment, is configured to calculate a statistical distribution based on the historical performance data. In some embodiments, the distribution module 304 calculates a statistical distribution from the historical performance data for each event (e.g., flight leg or connection) of the crew pairing relating to an operation limitation. The statistical distribution may relate to flight duration, block time for a leg, connection time, amount of departure/arrival delay (e.g., scheduled time vs actual time), or the like. In certain embodiments, the limitation module 206 may indicate a subset of historical performance data associated with an operation limitation, wherein the distribution module 304 determines a statistical distribution of times relating to the operation limitation, based on the subset of historical data.

In some embodiments, the distribution module 304 fits the historical performance data to a statistical distribution. Fitting the historical data to a statistical distribution may include identifying a mean value, standard of deviation, and a symmetry or skew of the data about the mean value. In certain embodiments, the distribution module 304 may calculate a probability density function, a cumulative distribution function, a quantile function, or other statistical function specifying the probability distribution of the historical performance data.

In some embodiments, the distribution module 304 calculates statistical distributions for each leg of the crew pairing. Accordingly, each leg may be assessed individually by the reliability module 208 for reliability. In certain embodiments, the distribution module 304 calculates an overall statistical distribution the entire crew pairing. In one embodiment, the distribution module 304 may adjust and/or normalize the historical performance data prior to calculating the overall statistical distribution. For example, the distribution module 304 may determine the distribution an amount of departure/arrival delay, rather than actual departure/arrival times for the overall pairing, in order to adjust for differences in scheduled departure/arrival times.

The distribution module 304 communicates the statistical distribution to the reliability module 208, wherein the reliability module 208 calculates the reliability factor using the statistical distributions. For example, to support the reliability module 208 in calculating the block time reliability of the crew pairing with respect to a block time limitation, the distribution module 304 may create statistical distributions for block times of each leg in the pairing. As another example, to support the reliability module 208 in calculating a duty time reliability factor of the crew pairing, the distribution module 304 may create statistical distributions for duty times of each leg and connection in the pairing. In yet another example, to support the reliability module 208 in calculating the rest time reliability of the crew pairing, the distribution module 304 may create statistical distributions for rest times between duty periods in the pairing. While depicted in Figure 3 as separate from the reliability module 208, in other embodiments the distribution module 304 may be a component (e.g., a sub-module) of the reliability module 208.

The robustness module 306, in one embodiment, is configured to calculate a robustness value for the crew pairing. As used herein, the robustness value indicates a difference in reliability factor between two values (e.g., times), such as a scheduled (or allotted) time and a limiting time (e.g., a time at which an operation limitation is reached). The robustness module 306 may be used to identify the impact an increase (or decrease) in scheduled time may have on complying with the operation limitations.

For example, the scheduled flight duration may have a probability of 55% (indicating that a flight duration will be the less than or equal to the scheduled value 55% of the time), while the limiting flight duration may have a probability of 95% (indicating that a flight duration will be the less than or equal to the limiting value 95% of the time). The robustness of this pairing is 40%, equal to the difference between the probabilities of the scheduled flight duration and the limiting flight duration. While depicted in Figure 3 as separate from the reliability module 208, in other embodiments the robustness module 306 may be a component (e.g., a sub-module) of the reliability module 208.

The buffer module 308, in one embodiment, is configured to determine a scheduled value for the crew pairing that satisfies a particular reliability factor. In some embodiments, the buffer module 308 receives an input reliability factor (e.g., relating to an operation limitation) and uses the statistical distributions of the historical performance data to identify a value for which the crew pairing has the input reliability factor. For example, a user may desire that a crew pairing have a 95% duty time reliability (e.g., a 95% likelihood that the crew pairing will comply with a duty time limitation). The buffer module 308 may then identify a scheduled time having a 95% likelihood of complying with the duty time limitation.

In certain embodiments, the buffer module 308 is further configured to determine a scheduled value for the crew pairing that satisfies a predetermined reliability factor, such as a reliability threshold. In further embodiments, the buffer module 308 may identify a value that satisfies a particular reliability threshold relating to particular operation limitation, in response to the reliability module 208 determining that the crew pairing falls below the particular reliability threshold.

The roster module 310, in one embodiment, is configured to receive a duty roster for at least one crewmember over a period of time. For example, the duty roster may span a week, a month, a quarter, or other interval. A duty roster may include a plurality of pairings with scheduled rest time between consecutive pairings. Further, each pairing may include one or more duty periods with a rest period between consecutive duty periods. The roster module 310 identifies the duty roster and pairing therein. Through identifying the pairings of the duty roster, the apparatus 300 may assess the probability that the duty roster will comply with one or more operation limitations, such as rest period.

The fleet schedule module 312, in one embodiment, is configured to receive a schedule for the fleet over a period of time. For example, the fleet schedule module 312 may receive a daily fleet schedule, a weekly fleet schedule, a monthly fleet schedule, or the like. The schedule may comprise a plurality of pairings or portions thereof. For example, the fleet schedule module 312 may receive a daily fleet schedule comprising a plurality of single-day pairings scheduled for that day, a plurality of pairing portions scheduled for that day, or combinations thereof. Accordingly, the apparatus 300 may evaluate reliability factors for an entire fleet of vehicles (aircraft or otherwise) for any given day, week, month, or the like.

The selection module 314, in one embodiment, is configured to receive selection criteria for the historical performance data. In some embodiments, the selection criteria may be one or more of a departure/arrival time, a day of the week, a month, a season, an operating condition (e.g., a wind or weather condition), a flight number, an equipment identifier, a departure location, and an arrival location. In further embodiments, the selection criteria may define a range of values. For example, the selection criteria may call for departure times between 0600 and 1000, during weekends in spring, and from the John F. Kennedy International Airport.

The filter module 316, in one embodiment, is configured to return historical performance data meeting the selection criteria. In some embodiments, the filter module 316 ignores (e.g., filters out) historical performance data not meeting the selection criteria. For example, for the above selection criteria of departure times between 0600 and 1000 during weekends in spring from the John F. Kennedy International Airport, the history module 204 may access historical performance data for flights from the John F. Kennedy International Airport, wherein the filter module 316 filters out flights with departure times between 1001 and 0559, flights during weekdays, and flights during summer, autumn, or winter. Accordingly, the filter module 316 screens the historical performance data so as to return only historical performance data meeting the selection criteria.

In some embodiments, the filter module 316 may be further configured to filter out data relating to extraordinary events. For example, in April and May of 2010 many flights in Europe were disrupted due to volcanic ash along flight paths. The filter module 316 may be configured to discard data belonging to disrupted flights, unless explicitly requested in the selection criteria. In further embodiments, the selection module 314 may filter out implied selection criteria, such as the historical performance data where the flight was not cancelled or diverted.

The sample size module 318, in one embodiment, is configured to compare a sample size of the historical performance data meeting the selection criteria to a sample size threshold. In some embodiments, the sample size threshold is a minimum amount of data that is statistically significant. For example, too small of a sample size may result in an inaccurate reliability assessment. Generally, the performance database 108 will contain thousands of entries of flights made over several years; however, too limiting of selection criteria may result in the sample size becoming too small. For example, a newly offered flight time may result in an insufficient sample size, if historical performance data is filtered based on the new flight time.

Accordingly, the sample size module 318 may indicate to the filter module 316 that the sample size is below the sample size threshold, wherein the filter module 316 returns additional historical performance data. Using the earlier example, the filter module 316 may return additional data relating to flights during a similar time of day (e.g., morning), day of the week, or the like. Where the scheduled times of the additional historical performance data differ from the scheduled times of the filtered historical performance data, the scheduled times of the additional historical performance data may be adjusted to match those of the filtered historical performance data (e.g., preserving amounts of delay).

The threshold module 320, in one embodiment, is configured to identify a low-reliability event in the crew pairing. As used herein, a low-reliability event refers to a time and/or location where the likelihood of a crew being unable to complete their assignment (e.g., due to exceeding one or more operation limitations) is above a certain amount. In some embodiments, the threshold module 320 may be used to pinpoint problem pairings in a fleet schedule or duty roster. In certain embodiments, the threshold module 320 may be used to identify problem legs within a pairing.

For example, for a four-leg pairing having a scheduled block time equal to the block time limit, there may be a significant probability of exceeding the block time limit (resulting in a low reliability factor for the pairing). In some embodiments, the threshold module 320 may identify the last leg of this pairing as the low-reliability event, as the last leg is the likely time and place where a block time limit violation may occur. In further embodiments, the threshold module 320 may identify the connection between the third and fourth legs as the low-reliability event, as this would be the last opportunity to avoid the block time limit violation (e.g., by changing crew so that the original crew does not exceed the block time limit).

A low-reliability event may be associated with a reliability factor, the reliability factor indicating a statistical probability of satisfying an operation limitation or a scheduled amount. In some embodiments, a user may be able to filter for low-reliability events of a threshold probability. Thus, a manager, such as the management system 104, may be able to identify where and when a significant low-reliability event (e.g., a low-reliability event meeting the threshold probability) occurs. Beneficially, this may allow the manager to mitigate the low-reliability event, such as modifying a pairing or scheduling a crew change. In some embodiments, the threshold module 320 may suggest the mitigating action.

In some embodiments, the threshold module 320 may identify confluences of low-reliability events. As used herein, a confluence of low-reliability events refers to a plurality of low-reliability events occurring at the same location and at the same (or similar) time. The confluence of low-reliability events may lead to operational problems. In some embodiments, the confluence of low-reliability events may include two or more low-reliability events of the same pairing that relate to different operation limitations. In other embodiments, the confluence of low-reliability events may include low-reliability events for different pairings. Currently, there is no tool to measure, identify, and report on multiple low-reliability events. Beneficially, the threshold module 320 allows a manager to identify these low-reliability situations ahead of time so as to schedule additional resources, modify pairings, or otherwise mitigate these operational problems.

In certain embodiments, the threshold module 320 may identify low-reliability legs of a crew pairing. For example, each leg may be associated with an apportioned amount of the operation limitation. For example, each leg of a pairing may be assigned a permissible amount of excess based on the difference between a scheduled value (e.g., scheduled flight time, scheduled block time, scheduled connection time, scheduled rest time, or the like) and an operation limitation (e.g., flight time limit, a block time limit, a minimum connection time, a minimum rest time, or the like). The threshold module 320 may identify individual legs below a threshold probability of exceeding the apportioned amount (e.g., the scheduled flight time plus the permissible flight time excess). By identifying the low-reliability legs (even if the overall pairing reliability is acceptable), the threshold module 320 allows a manager to mitigate problems with the low-reliability legs, such as scheduling additional resources for that leg.

The leg probability module 322, in one embodiment, is configured to calculate, for each of the one or more operation limitations and/or for each leg of the crew pairing, a probability of exceeding an apportioned amount of a particular operation limitation during the leg. As described above, a leg is a segment of the crew pairing. For example, a crew pairing originating at Chicago, traveling to Dallas, traveling next to Denver, and then returning to Chicago, would have three legs. For each leg, the leg probability module 322 identifies a leg likelihood relating to an operation limitation, wherein the leg likelihood indicates a probability of exceeding an allotted value during the leg, the allotted value being an apportioned amount of the operation limitation. In certain embodiments, the leg probability module 322 reports the calculated leg likelihoods for each leg to the reliability module 208 and/or the aggregate module 324, wherein the reliability module 208 and/or the aggregate module 324 calculates a cumulative probability of exceeding the operation limitation, based on the individual leg likelihoods.

As an example, using the above crew pairing, the flight time may be as follows: the Chicago-to-Dallas leg may be scheduled for 2.5 hours, the Dallas-to-Denver leg may be scheduled for 2.2 hours, and the Denver-to-Chicago leg may be scheduled for 2.6 hours. Thus, the crew pairing may have a scheduled flight time of 7.3 hours. Assume that the flight time operation limitation is 7.5 hours, with penalties assessed at 7.6 hours of flight time. In one embodiment, the leg probability module 322 may calculate the likelihood of the flight time any one leg increasing by 0.3 hours to be fairly low. However, a series of small (e.g., 0.1 hour) flight time increases at each leg would also cause the overall flight time to exceed the flight time limit. Thus, in some embodiments, the leg probability module 322 may calculate the likelihood of the flight time any one leg increasing by 0.1 hours (e.g., an apportioned amount of the operation limitation) to be more significant.

While the above example describes the leg probability module 322 calculating two likelihoods for each leg (e.g., a likelihood of a 0.3 hour flight time increase and a likelihood of a 0.1 hour flight time increase), in other embodiments, the leg probability module 322 may calculate any number of likelihoods for values between the scheduled time and the limit time. Further, while the leg probability module 322 is described as calculating likelihoods for the legs of the crew pairing, in some embodiments the leg probability module 322 may also calculate likelihoods for each connection in the crew pairing (e.g., each period between successive legs). The leg probability module 322 may further report the calculated likelihoods for each connection to the reliability module 208 and/or the aggregate module 324, wherein the reliability module 208 and/or the aggregate module 324 calculates a cumulative probability of exceeding the operation limitation, based on the likelihoods of each connection in the crew pairing.

The aggregate module 324, in one embodiment, is configured to determine an aggregate likelihood for one or more operation limitations based on the individual legs' probabilities of exceeding the operation limitations. The aggregate likelihood may indicate a probability of the crew pairing exceeding the particular operation limitation over the entire crew pairing. In some embodiments, the aggregate module 324 may be further configured to determine an aggregate likelihood for the entire crew pairing based on the likelihood of each connection. As described above, the leg probability module 322 may report calculated likelihoods for each leg and/or connection to the aggregate module 324, wherein the aggregate module 324 calculates a cumulative probability of exceeding the operation limitation (the aggregate likelihood). The aggregate module 324 may report the aggregate likelihood to the reliability module 208, wherein the reliability module 208 evaluates the reliability factor of the crew pairing based on the aggregate likelihood.

In some embodiments, the aggregate module 324 calculates aggregate likelihoods for various combinations of increase (e.g., delay) among the individual legs. Continuing the above example, for a three-leg pairing with scheduled leg flight times of 2.5 hours, 2.2 hours, and 2.6 hours, and with penalties beginning after 0.3 hours of increase (e.g., penalties beginning at 7.6 hours), the aggregate module 324 may calculate aggregate likelihoods for a plurality of combinations of leg flight time increases that total the 0.3 hours of increase. With three legs and individual increases in increments of 0.1 hours, the aggregate module 324 may evaluate 10 combinations of legs flight times that total 7.6 hours of overall flight time.

In some embodiments, the aggregate module 324 may average the leg likelihoods to determine the aggregate likelihood. In further embodiments, the aggregate module 324 may weigh leg likelihoods based on robustness of the legs, wherein the aggregate likelihood is a weighted average of the individual leg likelihoods. In other embodiments, the aggregate module 324 may select the highest leg likelihood among the plurality of leg likelihoods as the aggregate likelihood. Where a crew pairing includes a plurality of duty periods, the aggregate module 324 may calculate aggregate likelihoods for each duty period in the crew pairing.

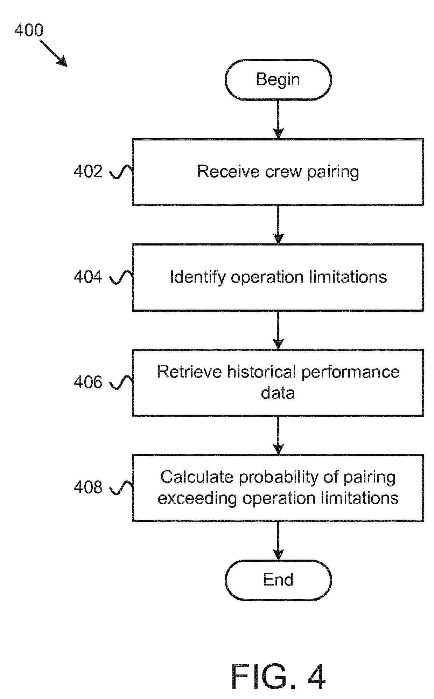

Figure 4 is a schematic flowchart diagram of one embodiment of a method 400 for analyzing pairing reliability. In some embodiments, the method 400 is performed using a pairing reliability module, such as the pairing reliability module 118 described above with reference to Figures 1, 2, and 3. In some embodiments, the method 400 is performed by a processor executing program code, for example, a microcontroller, a microprocessor, a central processing unit (CPU), a graphics processing unit (GPU), an auxiliary processing unit, a FPGA, or the like.

The method 400 begins and the pairing schedule module 202 receives 402 a crew pairing. In some embodiments, the crew pairing comprises a plurality of flight legs, a plurality of scheduled departure times, and a plurality of scheduled arrival times, each flight leg being associated with a scheduled departure time and a scheduled arrival time. In further embodiments, the crew pairing may comprise a plurality of duty periods with a rest period between each pair of successive duty periods.

The limitation module 206 identifies 404 a plurality of operation limitations associated with the crew pairing. The operation limitations may comprise operator (e.g., crew) limitations, equipment (e.g., aircraft) limitations, or combinations thereof. In some embodiments, the operation limitations include a maximum flight time, a maximum flight duty period, a minimum rest period, and a minimum connection time. In other embodiments, the operation limitations may include a maximum block time, a maximum duty time, a minimum rest period, and a minimum connection time.

The history module 204 retrieves 406 historical performance data based on the plurality of flight legs, scheduled departures times, and scheduled arrival times. In some embodiments, the historical performance data includes flight records from previous flights along the scheduled flight legs. In certain embodiments, the historical performance data is filtered to match selection criteria, such as a departure/arrival time, a day of the week, a month, a season, an operating condition (e.g., a wind or weather condition), a flight number, an equipment identifier, a departure location, and an arrival location. Retrieving 406 the historical data may include receiving actual departure times, actual arrival times, an amount of departure delay, an amount of arrival delay, actual block times, actual flight times, actual flight duty periods, actual connection times, actual rest times, actual duty times, or the like.

The reliability module 208 calculates 408, for each of the plurality of operation limitations, a probability of the crew pairing exceeding the operation limitation. In some embodiments, the probability of exceeding the operation limitation is based on the historical performance data. Calculating 408 the probability of exceeding an operation limitation may include identifying a statistical distribution of the historical performance data, such as a cumulative distribution function, and determining the probability of exceeding the operation limitation based on the statistical distribution.

In some embodiments, calculating 408 the probability of exceeding an operation limitation may include calculating an individual leg probability for each flight leg of the crew pairing, and calculating an aggregate likelihood based on the individual leg probabilities. In certain embodiments, calculating 408 the probability of exceeding an operation limitation may include identifying a point in time and/or location where the probability of exceeding the operation limitation may be mitigated, for example by adding additional resources or modifying the crew pairing. Subsequently, the method 400 ends.

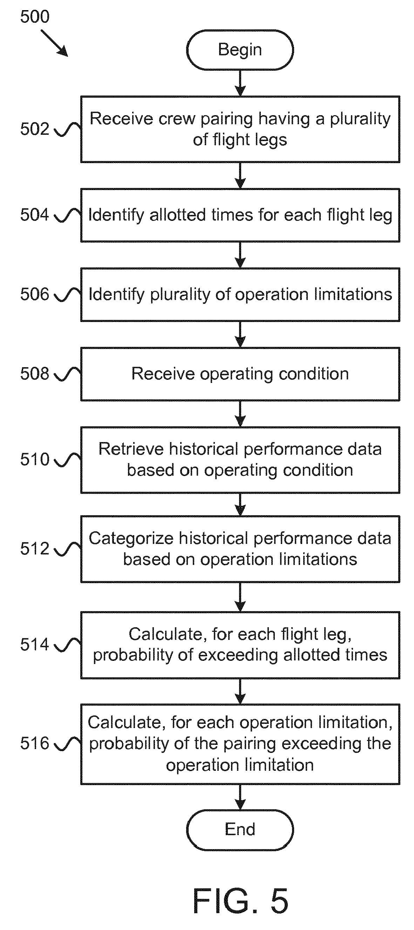

Figure 5 is a schematic flowchart diagram of one embodiment of a method 500 for analyzing pairing reliability. In some embodiments, the method 500 is performed using an autonomy processor, such as the pairing reliability module 118 described above with reference to Figures 1, 2, and 3. In some embodiments, the method 500 is performed by a processor executing program code, for example, a microcontroller, a microprocessor, a central processing unit (CPU), a graphics processing unit (GPU), an auxiliary processing unit, a FPGA, or the like.

The method 500 begins and the pairing schedule module 202 receives 502 a crew pairing having a plurality of flight legs. In some embodiments, the crew pairing includes a plurality of scheduled departure times and a plurality of scheduled arrival times, wherein each flight leg is associated with a scheduled departure time and a scheduled arrival time.

The pairing schedule module 202 identifies 504 one or more allotted times for each flight leg. The one or more allotted times may include an allotted flight time, an allotted flight duty period, and an allotted connection time. In some embodiments, identifying the allotted flight time includes calculating a difference between the scheduled arrival time and the scheduled departure time. In further embodiments, the allotted flight time may include the scheduled flight time (e.g., arrival time minus departure time) plus a buffer time to account for normal (small) delays. Similarly, the allotted flight duty period and allotted connection time may include a scheduled value plus a buffer value to account for normal delays.

The limitation module 206 identifies 506 a plurality of operation limitations associated with the crew pairing. The operation limitations may comprise operator (e.g., crew) limitations, equipment (e.g., aircraft) limitations, or combinations thereof. In some embodiments, the operation limitations include a maximum flight time, a maximum flight duty period, a minimum rest period, and a minimum connection time. In other embodiments, identifying 506 the operation limitations may include identifying a maximum block time, a maximum duty time, a minimum rest period, and a minimum connection time.

The history module 204 receives 508 an operating condition relating to the crew pairing. The operating conditions may include weather conditions, wind conditions, lighting conditions, temperatures, and the like. In some embodiments, the receiving 508 the operating condition includes receiving a weather forecast for the date(s) of the crew pairing.

The history module 204 retrieves 510 historical performance data based on the operating condition. In some embodiments, retrieving 510 the historical data includes retrieving flight information from previous flights along the scheduled flight legs made in similar conditions to the received operating condition. The flight information may include actual departure times, actual arrival times, an amount of departure delay, an amount of arrival delay, actual flight times, actual flight duty periods, actual connection times, actual rest times, and the like. In certain embodiments, the historical performance data is filtered to match selection criteria, such as a departure/arrival time, a day of the week, a month, a season, a flight number, and/or an equipment identifier.

The limitation module 206 categorizes 512 the historical performance data based on the operation limitations. In some embodiments, categorizing 512 the historical performance data based on operation limitations includes identifying a subset of the historical performance data relevant to each operation limitation. For example, regarding a rest period limitation, the limitation module 206 may identify that duty period starts and ends as relevant to rest period, but that connection times within a duty period are not relevant. As another example, the limitation module 206 may determine that dates relating to amounts of delay (e.g., departure delay) are relevant to flight time and flight duty period time, but not to rest period times.

The reliability module 208 calculates 514, for each flight leg, a probability of exceeding allotted times for the flight leg, based on the historical performance data. For example, the reliability module 208 may calculate 514 the probability of exceeding each of the allotted flight time, allotted flight duty period, and allotted connection time. The probability of exceeding each allotted time may be based on a distribution of historical data categorized as relevant to the allotted time type (e.g., flight time, flight duty period, or connection time).

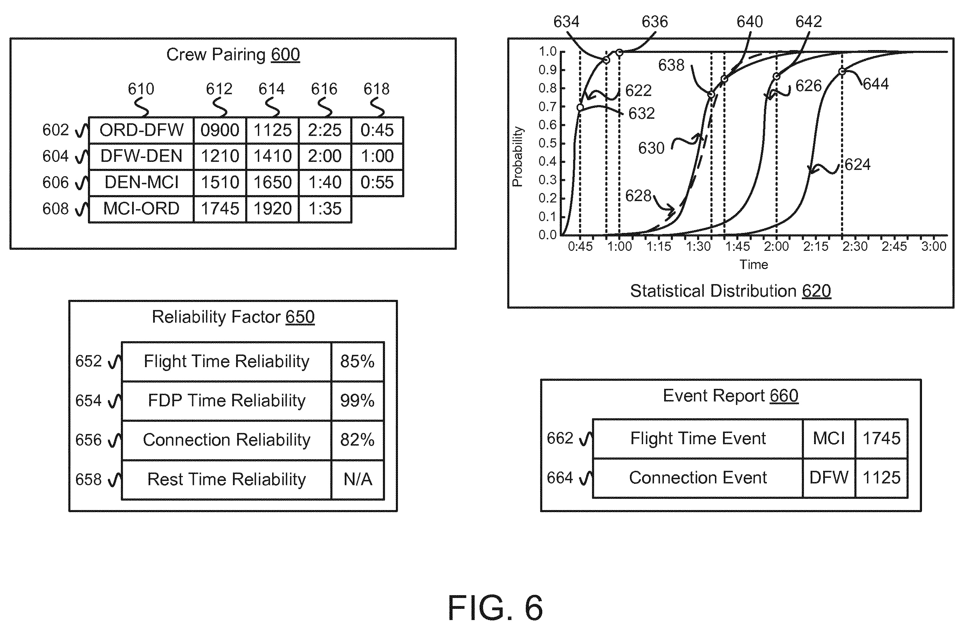

The reliability module 208 then calculates 516, for each of the plurality of operation limitations, a probability of the crew pairing exceeding the operation limitation. In some embodiments, calculating 516 the probability of exceeding an operation limitation may include calculating an aggregate likelihood based on the individual leg probabilities. In certain embodiments, calculating 516 the probability of exceeding an operation limitation may include identifying a point in time and/or location where the probability of exceeding the operation limitation may be mitigated, for example by adding additional resources or modifying the crew pairing. The method 500 ends. Figure 6 is a schematic block diagram of one embodiment of crew pairing 600, a statistical distribution 620, a reliability factor report 650, and an event report 660. The crew pairing 600 may include a plurality of legs 602-608, a departure/arrival locations 610 for each leg 602-608, scheduled departure times 612 for each leg 602-608, scheduled arrival times 614 for each leg 602-608, scheduled flight times 616 for each leg 602-608, and connection times 618 for flight legs 602-606. As depicted, a first leg 602 may include a scheduled departure from airport ORD (Chicago O'Hare International Airport) at 9:00 AM and a scheduled arrival at airport DFW (Dallas/Fort Worth International Airport) at 11:25 AM. The first leg 602 may be associated with a scheduled flight time 616 of 2:25 hours and a scheduled connection time 618 of 0:45 hours. A second leg 604 may include a scheduled departure from airport DFW at 12:10 PM and a scheduled arrival at airport DEN (Denver International Airport) at 2:10 PM. The second leg 604 may be associated with a scheduled flight time 616 of 2:00 hours and a scheduled connection time 618 of 1:00 hours.

A third leg 606 may include a scheduled departure from airport DEN at 3:10 PM and a scheduled arrival at airport MCI (Kansas City International Airport) at 4:50 PM. The third leg 606 may be associated with a scheduled flight time 616 of 1:40 hours and a scheduled connection time 618 of 0:55 hours. A fourth leg 608 may include a scheduled departure from airport MCI at 5:45 PM and a scheduled arrival at airport ORD at 7:20 PM. The fourth leg 608 may be associated with a scheduled flight time 616 of 1:35 hours. As the fourth leg 608 is the final leg of the pairing 600, there is no connection time associated with the fourth leg 608. Thus, the crew pairing 600 may have a total scheduled flight time of 7:40 hours. Assume that the flight time limit for a 24-hour period is 8:00 hours, with violation beginning at 8:01 hours.

A pairing schedule module 202 receiving the crew pairing 600 may identify the scheduled times associated with the crew pairing 600. A history module 204 may retrieve historical performance data for flights along each leg 602-608. Additionally, a limitation module 206 may identify application operation limitations for the crew pairing 600, such as a flight time limit, a flight duty period (FDP) limit, and a connection time limit. In certain embodiments, the FDP limit may be based on the number of legs in a pairing and/or the scheduled departure time of the first flight of the pairing. Assume that for the crew pairing 600 (a four-leg pairing beginning at 0900), the FDP limit is 13:00 hours. In some embodiments, the limitation module 206 may determine that a rest time limit is not applicable as the crew pairing 600 does not include multiple duty periods.

Based on historical performance data for flights along the flight legs 602-608, a reliability module 208 (alternatively a distribution module 304) may create a statistical distribution 620. As depicted, the statistical distribution 620 may include a flight time cumulative distribution function (CDF) for each flight leg 602-608 (e.g., CDFs 624-630). Additionally, the reliability module 208 (or distribution module 304) may create a connection time CDF 622 for the connections of the crew pairing 600. Based on the CDFs 624-630, the reliability module 208 may identify a probability that the actual flight time or connection time for each flight leg 602-608 will be less than the scheduled times 616-618.

Regarding the scheduled connection times 618, the reliability module 208 may use the CDF 622 to identify probabilities 632-636 for each scheduled connection times 618. As depicted, a connection time associated with the first leg 602 may have a 70% probability 632 of being within the 45 minute scheduled connection time 618, a connection time associated with the second leg 604 may have a 99% probability 636 of being within the 1 hour minute scheduled connection time 618, and a connection time associated with the third leg 606 may have a 95% probability 634 of being with the 55 minute scheduled connection time. While the depicted embodiment includes a single CDF for all connection times, in other embodiments a separate CDF may be created for each connection location.

Regarding the scheduled flight times 616, the reliability module 208 may use the CDF 624 to identify a 91 % probability 644 that the flight time for the first leg 602 will be within the scheduled flight time 616 of 2:25 hours. The reliability module 208 may use the CDF 626 (shown in dashed line) to identify an 86% probability 642 that the flight time for the second leg 604 will be within the scheduled flight time 616 of 2:00 hours. The reliability module 208 may use the CDF 628 to identify an 85% probability 640 that the flight time for the third leg 606 will be within the scheduled flight time 616 of 1:40 hours. The reliability module 208 may use the CDF 630 (shown in solid line) to identify a 79% probability 638 that the flight time for the fourth leg 608 will be within the scheduled flight time 616 of 1:35 hours.

Based on the probabilities associated with each flight leg 602-608, the reliability module 208 may determine an overall reliability factor report 650 for the crew pairing 600. As depicted, the reliability factor report 650 is includes an assessment for each operation limitation identified by the limitation module 206. Here, the reliability factor report 650 includes values for overall flight time reliability 652, flight duty period (FDP) time reliability 654, and connection reliability 656, but does not include a value for rest time reliability, as this is not application to the crew pairing 600.

In some embodiments, the reliability module 208 calculated the overall flight time reliability 652 by averaging the probabilities 638-644 of the flight time for each leg being within the scheduled flight time. Here, the arithmetic average of 79% (probability 638 associated with the fourth leg 608), 85% (the probability 640 associated with the third leg 606), 86% (the probability 642 associated with the second leg 604), and 91% (the probability 644 associated with the first leg 602) results in an overall flight time reliability 652 of 85%. Similarly, an arithmetic average of the probabilities 632-636 associated with the connection times of the crew pairing 600 result in an overall connection reliability 656 of 82%.

The FDP time reliability 654 may be calculated by comparing the scheduled FDP (e.g., 10:20 hours) to the FDP limit (13:00 hours for the crew pairing 600). In some embodiments, the reliability module 208 may reference a CDF for actual FDP to determine the probability of the crew pairing 600 exceeding the FDP limit. In other embodiments, the reliability module 208 may calculate the difference between the scheduled FDP and the FDP limit (e.g., 1:40 hours) and calculate a probability of combinations of flight legs and connection times exceeding the 1:40 hour difference. Here, there is a near 0% likelihood of any connection or flight time exceeding the scheduled amount by 1:40 hours. Accordingly, the FDP time reliability 654 may be determined to be 99%.

In some embodiments, a manager may request an event report 660 including low-reliability events having a reliability factor below a predetermined reliability threshold. As described above, the reliability factor is the probability that an event (e.g., flight leg or connection) meets a predetermined amount, such as an operation limitation, an apportioned amount of the operation limitation, or a scheduled amount. Assume that here, predetermined reliability threshold is 80%. Referring to the probabilities 632-644, the probability 632 associated with a connection time of the first leg 602 and the probability 638 associated with a flight time of the fourth leg 608 are both below 80%. Accordingly, the event report 660 includes a flight time event 662 associated with the flight time of the fourth leg 608 and a connection time event 664 associated with the connection time of the first leg 602. In some embodiments, the events 662-664 include a location and time where the low-reliability event occurs. Here, the departure location 610 (e.g., MCI) and departure time 612 (e.g., 1745) of the fourth leg 608 are associated with the flight time event 662 as this is the starting time and location for the fourth leg 608. Also, the arrival location 610 (DFW) and arrival time 614 of the first leg 602 are associated with the connection time event 664 as this is the location and starting time of the connection associated with the connection time event 664.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of computer readable program code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of computer readable program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the computer readable program code may be stored and/or propagated on in one or more computer readable medium(s).

The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present invention may be written in any combination of one or more programming languages, including an object oriented programming language such as Java, Smalltalk, C++ or the like and conventional procedural programming languages, such as the "C" programming language or similar programming languages (e.g., LabVIEW). The computer readable program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The schematic flow chart diagrams included herein are generally set forth as logical flow chart diagrams. As such, the depicted order and labeled steps are indicative of one embodiment of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.
Clause 1. An apparatus for analyzing pairing reliability, the apparatus comprising:
   a pairing schedule module configured to receive a crew pairing, the crew pairing comprising a plurality of connectable legs;
   a history module configured to retrieve historical performance data for at least one connectable leg of the plurality of connectable legs in the crew pairing;
   a limitation module configured to identify one or more operation limitations applicable to the crew pairing; and
   a reliability module configured to calculate a reliability factor for the crew pairing based on the historical performance data, the reliability factor indicating a probability that the crew pairing will comply with the one or more operation limitations.
Clause 2. The apparatus of clause 1, further comprising a threshold module configured to identify a time and location where the reliability factor is below a threshold.
Clause 3. The apparatus of any of clauses 1-2, further comprising a distribution module configured to calculate a plurality of statistical distributions based on the historical performance data, each statistical distribution corresponding to one of the connectable leg of the crew pairing, wherein the reliability module calculates the reliability factor using the statistical distributions.
Clause 4. The apparatus of clause 3, further comprising a robustness module configured to calculate a robustness value for the crew pairing, wherein the robustness value indicates a difference in probabilities between a scheduled value of the statistical distribution and a limiting value of the crew pairing.
Clause 5. The apparatus of any of clauses 1-4, wherein the reliability module comprises:
   a leg probability module that calculates, for each leg of the crew pairing, a probability of exceeding an apportioned amount of a particular operation limitation during the leg; and
   an aggregate module that determines an aggregate likelihood for the particular operation limitation based on the probability of each leg exceeding the particular operation limitation, wherein the aggregate likelihood indicates a probability of the crew pairing exceeding the particular operation limitation.
Clause 6. The apparatus of any of clauses 1-5, wherein the history module comprises:
   a selection module configured to receive selection criteria for the historical performance data; and
   a filter module configured to return historical performance data meeting the selection criteria, wherein the selection criteria is selected from the group consisting of a time, a month, a season, an operating condition, a flight number, an equipment identifier, a departure location, and an arrival location.
Clause 7. The apparatus of clause 6, wherein the history module further comprises a sample size module configured to compare a sample size of the historical performance data meeting the selection criteria to a sample size threshold, wherein the filter module returns additional historical performance data in response to the sample size being below the sample size threshold.
Clause 8. The apparatus of any of clauses 1-7, wherein the historical performance data comprises one or more of: an actual departure time, an actual arrival time, an actual block time, an amount of departure delay, and an amount of arrival delay.
Clause 9. The apparatus of any of clauses 1-8, wherein the operation limitations comprise one or more of: a minimum rest period, a minimum connection time, a maximum flight time, and a maximum flight duty period time.
Clause 10. The apparatus of any of clauses 1-9, further comprising a buffer module configured to determine a scheduled value for the crew pairing that satisfies a predetermined reliability factor.
Clause 11. The apparatus of any of clause 1-10, wherein the pairing schedule module is further configured to receive a daily schedule comprising a plurality of crew pairings in a given day, the apparatus comprising an aggregator module configured to combine reliability factors of the plurality of crew pairings in the daily schedule.
Clause 12. A method comprising:
   receiving a crew pairing, the crew pairing comprising a plurality of flight legs organized into one or more duty periods, a plurality of scheduled departures times, and a plurality of scheduled arrival times, each flight leg associated with a scheduled departure time and a scheduled arrival time;
   identifying a plurality of operation limitations associated with the crew pairing;
   retrieving historical performance data based on the plurality of flight legs, scheduled departures times, and scheduled arrival times; and
   calculating a probability of a duty period in the crew pairing exceeding an operation limitation, based on the historical performance data.
Clause 13. The method of clause 12, further comprising receiving an operating condition, wherein retrieving historical performance data comprises retrieving actual departure times, actual arrival times, actual block times, amount of departure delay, and amount of arrival delay for flights along each of the plurality of flight legs having operated in the operating condition.
Clause 14. The method of any of clauses 12-13, wherein calculating the probability of a duty period in the crew pairing exceeding the operation limitation comprises:
   calculating, for each leg of the crew pairing, a probability that a duty time will exceed an allotted duty time;
   calculating, for each leg of the crew pairing, a probability that a block time will exceed an allotted block time; and
   calculating, for each pair of legs of the crew pairing, a probability that a connection time will meet a minimum connection time.
Clause 15. The method of any of clauses 12-14 further comprising:
   receiving a reliability threshold; and
   identifying a time and location in the crew pairing where the probability of the crew pairing exceeding the operation limitation is greater than the reliability threshold.
Clause 16. The method of any of clauses 12-15, wherein calculating the probability of a duty period in the crew pairing exceeding the operation limitation comprises calculating a block time reliability factor, a duty time reliability factor, a rest time reliability factor, and a connection time reliability factor.
Clause 17. A computer program product comprising a computer readable storage medium that stores code executable by a processor, the executable code comprising code to perform:
   receiving an itinerary, the itinerary comprising a plurality of legs, a plurality of scheduled departures times, and a plurality of scheduled arrival times, each leg associated with a scheduled departure time and a scheduled arrival time;
   identifying a plurality of operation limitations associated with the itinerary;
   retrieving historical performance data based on the plurality of legs, departures times, and arrival times; and
   calculating, for each of the plurality of operation limitations, a probability that the itinerary will surpass the operation limitation based on the historical performance data.
Clause 18. The computer program product of clause 17, wherein the plurality of operation limitations comprise equipment limitations and operator limitations.
Clause 19. The computer program product of clause 18, wherein the operator limitations include a minimum rest period, a minimum connection time, a maximum flight time, and a maximum flight duty period time.
Clause 20. The computer program product of any of clauses 17-20, wherein receiving the itinerary comprises receiving a schedule having a plurality of itineraries, the executable code further comprising code to perform calculating a probability that a rest time between consecutive itineraries will meet a rest time limitation.

The present subject matter may be embodied in other specific forms without departing from its spirit or essential characteristics. The described embodiments are to be considered in all respects only as illustrative and not restrictive. All changes which come within the meaning and range of equivalency of the claims are to be embraced within their scope.

## Claims

1. An apparatus (200) for analyzing pairing reliability (118), the apparatus (200) comprising:
a pairing schedule module (202) configured to receive a crew pairing (600), the crew pairing (600) comprising a plurality of connectable legs (602-608);
a history module (204) configured to retrieve historical performance data for at least one connectable leg of the plurality of connectable legs (602-608) in the crew pairing (600);
a limitation module (206) configured to identify one or more operation limitations applicable to the crew pairing (600); and
a reliability module (208) configured to calculate a reliability factor (650) for the crew pairing (600) based on the historical performance data, the reliability factor (650) indicating a probability that the crew pairing (600) will comply with the one or more operation limitations.

2. The apparatus (200) of claim 1, further comprising a threshold module (320) configured to identify a time and location where the reliability factor (650) is below a threshold.

3. The apparatus (200) of any of claims 1-2, further comprising a distribution module (304) configured to calculate a plurality of statistical distributions (620) based on the historical performance data, each statistical distribution (620) corresponding to one of the connectable leg (602-608) of the crew pairing (600), wherein the reliability module (208) calculates the reliability factor (650) using the statistical distributions (620).

4. The apparatus (200) of any of claims 1-3, wherein the reliability module (208) comprises:
a leg probability module (322) that calculates, for each leg of the crew pairing (600), a probability of exceeding an apportioned amount of a particular operation limitation during the leg; and
an aggregate module (324) that determines an aggregate likelihood for the particular operation limitation based on the probability of each leg exceeding the particular operation limitation, wherein the aggregate likelihood indicates a probability of the crew pairing (600) exceeding the particular operation limitation.

5. The apparatus (200) of any of claims 1-4, wherein the history module (204) comprises:
a selection module (314) configured to receive selection criteria for the historical performance data; and
a filter module (316) configured to return historical performance data meeting the selection criteria, wherein the selection criteria is selected from the group consisting of a time, a month, a season, an operating condition, a flight number, an equipment identifier, a departure location, and an arrival location.

6. The apparatus (200) of claim 5, wherein the history module (204) further comprises a sample size module (318) configured to compare a sample size of the historical performance data meeting the selection criteria to a sample size threshold, wherein the filter module (316) returns additional historical performance data in response to the sample size being below the sample size threshold.

7. The apparatus (200) of any of claims 1-6, wherein the historical performance data comprises one or more of: an actual departure time, an actual arrival time, an actual block time, an amount of departure delay, and an amount of arrival delay.

8. The apparatus (200) of any of claims 1-7, further comprising a buffer module (308) configured to determine a scheduled value for the crew pairing (600) that satisfies a predetermined reliability factor (650).

9. The apparatus (200) of any of claims 1-8, wherein the pairing schedule module (202) is further configured to receive a daily schedule comprising a plurality of crew pairings (600) in a given day, the apparatus comprising an aggregator module (324) configured to combine reliability factors (650) of the plurality of crew pairings (600) in the daily schedule.

10. A method (400) comprising:
receiving (502) a crew pairing (600), the crew pairing (600) comprising a plurality of flight legs (602-608) organized into one or more duty periods, a plurality of scheduled departures times (612), and a plurality of scheduled arrival times (614), each flight leg associated with a scheduled departure time (612) and a scheduled arrival time (614);
identifying (506) a plurality of operation limitations associated with the crew pairing (600);
retrieving (510) historical performance data based on the plurality of flight legs (602-608), scheduled departures times (612), and scheduled arrival times (614); and
calculating (516) a probability of a duty period in the crew pairing (600) exceeding an operation limitation, based on the historical performance data.

11. The method (400) of claim 10, further comprising receiving (508) an operating condition, wherein retrieving historical performance data comprises retrieving actual departure times, actual arrival times, actual block times, amount of departure delay, and amount of arrival delay for flights along each of the plurality of flight legs (602-608) having operated in the operating condition.

12. The method (400) of any of claims 10-11, wherein calculating (516) the probability of a duty period in the crew pairing (600) exceeding the operation limitation comprises:
calculating (514), for each leg of the crew pairing (600), a probability that a duty time will exceed an allotted duty time;
calculating (514), for each leg of the crew pairing (600), a probability that a block time will exceed an allotted block time; and
calculating (514), for each pair of legs of the crew pairing (600), a probability that a connection time will meet a minimum connection time.

13. The method (400) of any of claims 10-12 further comprising:
receiving a reliability threshold; and
identifying a time and location in the crew pairing (600) where the probability of the crew pairing (600) exceeding the operation limitation is greater than the reliability threshold.

14. The method (400) of claim any of claims 10-13, wherein calculating (516) the probability of a duty period in the crew pairing (600) exceeding the operation limitation comprises calculating a block time reliability factor, a duty time reliability factor, a rest time reliability factor (658), and a connection time reliability factor (656).

15. A computer program product comprising a computer readable storage medium that stores code executable by a processor (112), the executable code comprising code to perform:
receiving an itinerary, the itinerary comprising a plurality of legs (602-608), a plurality of scheduled departures times (612), and a plurality of scheduled arrival times (614), each leg associated with a scheduled departure time (612) and a scheduled arrival time (614);
identifying a plurality of operation limitations associated with the itinerary;
retrieving historical performance data based on the plurality of legs (602-608), departures times (612), and arrival times (614); and
calculating, for each of the plurality of operation limitations, a probability (640) that the itinerary will surpass the operation limitation based on the historical performance data.
